# EUROPEAN PATENT SPECIFICATION

(11) **EP 3 632 213 B1**
(45) Date of publication and mention of the grant of the patent: **05.03.2025**
(21) Application number: 17911197.6
(22) Date of filing: 26.05.2017
(51) Int. Cl.: A23F 3/34, A23F 3/06, A23F 3/12, A23F 3/14

(54) **PROCESS FOR PREPARING BLACK TEA FROM YERBA MATE**
VERFAHREN ZUR HERSTELLUNG VON SCHWARZTEE AUS YERBA-MATE
PROCÉDÉ DE PRÉPARATION DE THÉ NOIR À PARTIR DE YERBA MATE

(30) Priority: 24.05.2017 BR 102017010844
(43) Date of publication of application: 08.04.2020
(73) Proprietor: Montagner, Juliana - Me, 95990-000 Ilopolis - RS (BR)
(72) Inventor: Montagner, Juliana - Me, 95990-000 Ilopolis - RS (BR)
(74) Representative: Pereira Garcia, João Luís
(86) International application number: PCT/BR2017/000053
(87) International publication number: WO 2018/213899

(56) References cited:
- BR-A- 0 008 069
- BR-A- 9 504 076
- CN-A- 101 690 534
- CN-A- 103 461 579
- CN-A- 103 907 732
- CN-A- 105 053 401
- CN-A- 105 875 877
- CN-A- 105 875 877
- CN-A- 106 359 694
- CN-A- 106 666 007
- GB-A- 189 701 124
- GB-A- 370 668
- KR-A- 20110 008 481
- US-A- 2 115 411
- US-A- 2 115 411
- US-A1- 2001 048 956
- US-A1- 2013 280 389
- C.I. HECK ET AL: "Yerba Mate Tea (Ilex paraguariensis): A Comprehensive Review on Chemistry, Health Implications, and Technological Considerations", JOURNAL OF FOOD SCIENCE, vol. 72, no. 9, 1 November 2007 (2007-11-01), pages R138 - R151, XP055085583, ISSN: 0022-1147, DOI: 10.1111/j.1750-3841.2007.00535.x
- SCOPARO, C. T.: "Metabolites de Camellia sinensis: caracterização estrutural e atividades biológicas", THESES, 24 February 2016 (2016-02-24), UNIVERSIDADE FEDERAL DO PARANÁ, pages 121, XP055613160
- MATSUMOTO, R. L. T.: "Atividade antioxidante do chá mate (Ilex paraguariensis)", THESIS, 2008, Faculdade de Saúde Pública. Sao Paulo, pages 1 - 103, XP055613156
- NORA, C. D.: "Trabalho acadêmico (Bacharelado de Quimica de Alimentos", ERVA-MATE, 1 January 2008 (2008-01-01), Pelotas, pages 1 - 47, XP055648025

## Description

### Technical Field

The following descriptive report for the invention relates to the preparation process of black tea made from yerba mate (*Ilex* paraguariensis).

### Prior Art

It is known that the food use of yerba mate is restricted to some regions of South America, where its largest consumption occurs in the form of mate, cultural habit. The present product has the potential to compete with consumers worldwide, as does *Camellia sinensis* green tea and black tea, and reach consumers that the mate would be unable to reach.

In order to use the yerba mate, various drying processes are known, for example, those described in PI 9504075-7 comprising a construction having a heat draft system through modular upper outlets with a butterfly valve on each chimney. Inside the oven, two belts are moved in series, in the opposite direction, one upper and one lower, and the belts are unloaded by means of load-shifters, consisting of a shaft with blades, rotating in the same direction as the belts. A deflector plate directs the yerba mate from the upper belt to the bottom one and to a discharge mouth steering the yerba mate from the lower belt to the output conveyor belt. The furnaces conduct the heat generated to the furnace by ducts that branch into two branches, where a distributor receives the yerba mate from a ribbon.

MU 7703102-4 describes an equipment for the processing of yerba mate in an industrial manner wherein it is powered by a vertical duct, feeds a sloping horizontal rail for the action of two rows of "S" cam pestles on the alternating rollers, and motor-drive sequentials to grind and create the gum on the yerba mate, such equipment may be made up of a single row of pestles, which in turn use wooden or steel sliding sleepers as a guide, so the pestles have free action to reach the bottom of the lower rail provided at their end a carrier thread that will take the yerba mate already in final form to usual bagging carriers.

PI 1002236-8 describes a fractionation and sapping process for yerba mate with hot water steam for eliminating toxicity. In short, it consists of passing the herb leaves o through a controlled and previously calculated temperature water steam bath, for the purpose of leaf preparation, for human consumption. The process is initiated by primary equipment with saturated steam injection, from an aquatubular boiler, interconnected to the secondary equipment that receives, through the injectors, the injection of reheated steam with preset pressure and temperature.

An equipment for sapping and drying of yerba mate leaves through hot water steam is described in MU 9001057-4, the purpose of which is to eliminate contamination of the yerba mate by PAHS (aromatic polycyclic hydrocarbons) from the sapping and drying process of the yerba mate leaves, the equipment is composed by a primary processing module with herb feed inlet and a secondary processing module, with injecting nozzles distributed six on each side amounting twelve in total, from the aquatubular boiler by saturated steam pipe and reheated steam pipe interconnected to the secondary nozzles, distributed two on each side and one on the top.

Heck et al. J. Food Science (2007), Vol. 72 (9), pp. R138-R151 is a scientific review on the production of yerba mate and provides a comparison to tea processing. US2115411 describes a process to produce yerba mate products, such as tea, wherein the leaves and twigs are soaked in an alkaline solution.

### Discussion

To expand a consumption form of yerba mate means introducing into the people diet the antioxidants presented in such species, which are superior to *Camellia sinensis.*

From what is known from the prior art, direct contact of yerba mate leaves with gases generated in the furnace during the sapping stage can produce contamination of the raw material by aromatic polycyclic hydrocarbons. These have high carcinogenic potential, which may remain in the final product intended for the consumer. It is also a problem, the absence of washing of leaves at the beginning of processing. Herb material may be contaminated by environmental pollutants, microorganisms and small invertebrates.

Thus, the invention has the object to solve the abovementioned problems by modifying the processing form by which the leaves are undergone. In the initial step of the proposed process for the production of black tea, the young leaves (buds) of yerba mate are withered for a certain time. Afterwards, the already withered leaves are rolled (rolling), followed by fermentation, after such fermentation the drying and segregation process takes place.

### Description

The embodiment of the invention proposed in this report is achieved by describing the different steps required for carrying out the present ordinary application, such that it can be fully reproduced by appropriate technique, allowing full characterization of the claimed process function.

Based on the different described steps that express the best way or preferential way to carry out the process now devised, is based on the descriptive part of the report clarifying aspects that may have been understood, in order to clearly determine the protection claimed.

These operations may vary, provided that they do not depart from the claimed subject matter.

In this case, the products can be generated by different operations.

In the developed preparation process, the young leaves of yerba mate should go through the following steps:
- withering the young leaves (buds) of yerba mate (withering). Leaves should be dehydrated for 12 to 14 hours until to wither, with the time required to remove 65 to 67% moisture. One of the ways to do this is as follows: the buds are placed on rectangular wooden sieves with bottom screens, supported by tripods one meter high from the floor. Every frame surrounding sieves from the floor to the tripod height will be closed with wood (forming a tunnel) and a fan with hot air will be installed at one end. The essential thing at this step is to wither the leaves, and the mentioned method may be cited or changed;
- afterwards, it is required to extract the juice from the leaves and immediately start rolling the leaves for the first time for 20 minutes (first rolling). The essential thing at this step is to roll the leaves, and the mentioned method may be cited or changed;
- afterwards, the oxidation or fermentation process is performed (oxidation or fermentation), in which the leaves are placed in taquara sieves near a fan for about one hour. The essential in this step is to oxidize/ferment the leaves, and the mentioned method may be cited or changed;
- next, there is the drying step (drying) in oven at 110 °C for about 24 minutes. The essential thing in this step is to dry the leaves, and the mentioned method can be cited or changed, and;
- the last step is segregation/sorting. After drying, larger/whole leaf, broken leaf and particulate leaf are sorted.

## Claims

1. A preparation process of black tea from yerba mate comprising the following steps:
- withering the young leaves (buds) of yerba mate, where the leaves should remain dehydrating for 12 to 14 hours to remove 65 to 67% moisture,
- extracting the juice from the leaves and immediately to start rolling the leaves for the first time for 20 minutes,
- afterwards, the oxidation or fermentation process is performed in which the leaves are placed in sieves near a fan for about one hour,
- next, the oven drying step is performed at 110 °C for about 24 minutes, and,
- the last step is segregation/sorting which consists of separating the larger/whole leaf, broken leaf and particulate leaf.

## Patentansprüche

1. Ein Zubereitungsprozess für schwarzen Tee aus Yerba Mate, umfassend die folgenden Schritte:
- Welken der jungen Blätter (Knospen) von Yerba Mate, wobei die Blätter 12 bis 14 Stunden lang dehydriert bleiben sollten, um 65 bis 67 % Feuchtigkeit zu entfernen,
- Entsaften der Blätter und das sofortige Rollen der Blätter für 20 Minuten,
- anschließend wird der Oxidations- oder Fermentationsprozess durchgeführt, bei dem die Blätter etwa eine Stunde lang in Sieben in der Nähe eines Ventilators platziert werden,
- anschließend wird der Ofentrocknungsschritt bei 110 °C für etwa 24 Minuten durchgeführt, und,
- der letzte Schritt ist die Trennung/Sortierung, bei der die größeren/ganzen Blätter, die gebrochenen Blätter und die Blattpartikel getrennt werden.

## Revendications

1. Un procédé de préparation de thé noir à partir de la yerba mate comprenant les étapes suivantes :
- flétrir les feuilles jeunes (bourgeons) de yerba mate, avec la déshydratation des feuilles, qui prend de 12 à 14 heures pour éliminer de 65 a 67 % de l'humidité,
- extraire le jus des feuilles et commencer immédiatement à rouler les feuilles pour la première fois pendant 20 minutes,
- ensuite, le processus d'oxydation ou de fermentation est effectué, dans lequel les feuilles sont mises dans des tamis près d'un ventilateur pendant une heure environ,
- ensuite, l'étape de séchage dans un four est effectuée à 110°C pendant 24 minutes environ, et
- la dernière étape est la séparation / tri, qui consiste à séparer les feuilles plus grandes / entières, les feuilles brisées et les feuilles broyées.
